# EUROPEAN PATENT APPLICATION

(11) **EP 4 761 185 A1**
(43) Date of publication of application: **17.06.2026**
(21) Application number: 24218990.0
(22) Date of filing: 11.12.2024
(51) Int. Cl.: H04L 12/12, H04L 12/413, H04L 12/40

(54) **ETHERNET DEVICE AND METHOD FOR THE ETHERNET DEVICE**

(71) Applicant: NXP B.V., 5656 AG Eindhoven (NL)
(72) Inventor: Walrant, Thierry G. C., 5656 AG Eindhoven (NL); Scheuermann, Christian, 5656 AG Eindhoven (NL); Sivaramakrishnan, Karthik, 5656 AG Eindhoven (NL); Wagner, Martin, 5656 AG Eindhoven (NL); Kleis, Sebastian, 5656 AG Eindhoven (NL)
(74) Representative: Schmütz, Christian Klaus Johannes

(57) **Abstract**

The present disclosure relates to an Ethernet device being configured to change stepwise from an idle state to a full active state, wherein the Ethernet device being configured to either detect a predefined signal during an arbitration cycle in order to perform a final step to fully activate the Ethernet device or otherwise to either maintain in an intermediate state or to change back to the idle state. The present disclosure also relates to a method for the Ethernet device.

## Description

### TECHNICAL FIELD

The present disclosure relates to an Ethernet device and a method for the Ethernet device.

### BACKGROUND

Modern automobiles include various electronic control units (ECUs) that implement, for example, engine control, power train control, airbag systems, antilock brake systems, cruise control, electric power steering, audio systems, window control systems, door control systems, mirror adjustment systems, and battery and recharging systems for hybrid/electric cars. The ECUs communicate with each other in an automobile via in-vehicle network (IVN) technologies such as Ethernet.

Ethernet is a well-known technology, and the Institute of Electrical and Electronic Engineers (IEEE) 802.3 Working Group is a collection of standards that define physical layer and data link layer media access control for wired Ethernet. An emerging IEEE standard that may be particularly applicable to in-vehicle networks is IEEE 802.3cg, which is a protocol for 10 Mb/s single twisted-pair Ethernet, also referred to as 10BASE-T1S, that enables multiple devices to connect to the same twisted-pair wire, also referred to as a "shared media". The IEEE 802.3cg physical layer can utilize Physical Layer Collision Avoidance (PLCA) for media access control.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Aspects of the disclosure are defined in the accompanying claims.

According to a first aspect of the present disclosure, an Ethernet device is provided. The Ethernet device comprising: an interface for coupling to a shared media, wherein the Ethernet device is configured to detect a first signal via the interface, wherein the Ethernet device is configured to change from an idle state to a tone detection state in response to detection of the first signal, wherein the Ethernet device in the tone detection state is configured to detect a predefined second signal pattern via the interface, wherein the Ethernet device is configured to change from the tone detection state to a cycle detection state in response to detection of the second signal pattern, wherein the Ethernet device in the cycle detection state is configured to detect a predefined third signal pattern via the interface, wherein the third signal pattern represents a predefined initial symbol of an arbitration cycle, wherein the arbitration cycle comprises the initial symbol and a series of a plurality of transmit opportunity, TO, time slots following the initial symbol, wherein the Ethernet device is assigned to a single TO time slot of the plurality of TO time slots as reference TO time slot, wherein the Ethernet device in the cycle detection state is configured to detect a fourth signal during the reference TO time slot, and wherein the Ethernet device is configured to change from the cycle detection state to a full-active state in response to detection of the fourth signal during the reference TO time slot.

In one or more embodiments, wherein the second signal pattern represents a wake-up tone.

In one or more embodiments, wherein the initial symbol of the arbitration cycle is a beacon symbol and/or is the leading symbol of the arbitration cycle.

In one or more embodiments, wherein the fourth signal comprises a fourth signal pattern, and wherein the Ethernet device in the cycle detection state is configured to detect the fourth signal pattern during the reference TO time slot, and wherein the Ethernet device is configured to change from the cycle detection state to the full-active state in response to the detection of the fourth signal pattern during the reference TO time slot.

In one or more embodiments, wherein the fourth signal pattern is predefined.

In one or more embodiments, wherein the Ethernet device is configured to maintain in the cycle detection state if the fourth signal is transmitted on the shared media during a TO time slot other than the reference TO time slot.

In one or more embodiments, wherein the Ethernet device is configured in the tone detection state to change to the idle state in response if the Ethernet device does not detect a signal during a predefined first detection time following the change to the tone detection state.

In one or more embodiments, wherein the Ethernet device is configured in the cycle detection state to change to the tone detection state in response if the Ethernet device does not detect the third signal pattern during a second detection time following the change to the cycle detection state.

In one or more embodiments, wherein the Ethernet device comprises a host unit, a digital MAC unit, a digital Phy unit, and an analog Phy unit.

In one or more embodiments, wherein the analog Phy is active in the idle state and/or tone detection state, and wherein each of the host processing unit, the MAC unit, and the digital Phy unit are inactive in the idle state and/or in the tone detection state.

In one or more embodiments, wherein the analog Phy unit is configured to detect the first signal, and wherein the Ethernet device is configured to change from the idle state to the tone detection state in response to the detection of the first signal.

In one or more embodiments, wherein the analog Phy is configured to detect the second signal pattern if the Ethernet Phy is in the tone detection state, and wherein the Ethernet device is configured to activate the digital Phy unit in response to the detection of the second signal pattern such that the Ethernet device changes from the tone detection state to the cycle detection state.

In one or more embodiments, wherein the active digital Phy unit is configured to detect the fourth signal pattern, and wherein the Ethernet device is configured to activate the MAC unit and the host unit in response to the detection of the fourth signal pattern such that the Ethernet device changes from the cycle detection state to the full-active state.

In one or more embodiments, wherein each TO time slot is uniquely assigned to a single dedicated Ethernet device of a plurality of Ethernet devices.

According to a second aspect of the present disclosure, a method for the Ethernet device is provided, wherein the Ethernet device comprising an interface for coupling to a shared media, and wherein the method comprising the following steps: (a) the Ethernet device detecting a first signal via the interface, (b) the Ethernet device changing from an idle state to a tone detection state in response to detection of the first signal, (c) the Ethernet device, if in the tone detection state, detecting a predefined second signal pattern via the interface, (d) the Ethernet device changing from the tone detection state to a cycle detection state in response to the detection of the second signal pattern, (e) the Ethernet device, if in the cycle detection state, detecting a predefined third signal pattern via the interface, wherein the third signal pattern represents a predefined initial symbol of an arbitration cycle, wherein the arbitration cycle comprises the initial symbol and a series of a plurality of transmit opportunity, TO, time slots following the initial symbol, wherein the Ethernet device is assigned to a single TO time slot of the plurality of TO time slots as reference TO time slot, (f) the Ethernet device, if in the cycle detection state, detecting a fourth signal during the reference TO time slot, and (g) the Ethernet device changing from the cycle detection state to a full-active state in response to detection of the fourth signal during the reference TO time slot.

### DESCRIPTION OF DRAWINGS

Embodiments of the present disclosure will be described in more detail with reference to the appended drawings. It is to be noted, however, that the appended drawings illustrate only typical embodiments of the present disclosure and are therefore not to be considered limiting of its scope, such that other equally effective embodiments may be implemented. Advantages of the subject matter claimed will become apparent to those skilled in the art upon reading this description in conjunction with the accompanying drawings, in which like reference numerals have been used to designate like elements, and in which:
Figure 1 shows an example of simplified block diagram of an Ethernet system.
Figure 2 shows an example of simplified block diagram of an Ethernet device.
Figure 3 shows an example of a simplified arbitration cycle.
Figure 4 shows an example a simplified state diagram.
Figure 5 shows another example a simplified state diagram.
Figure 6 shows an example of a simplified of a wake-up pattern.
Figure 7 shows an example of a simplified flow chart of the method.

### DESCRIPTION OF EMBODIMENTS

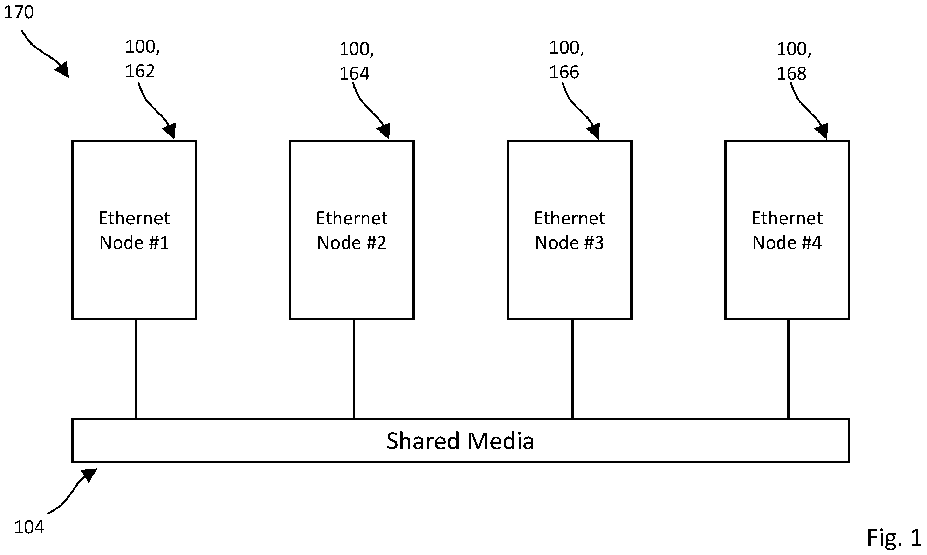

Figure 1 schematically illustrates an example of a communication system 170. The communication system 170 includes a plurality of Ethernet devices 100, which may also be referred to as Ethernet node 100 or as nodes 100. One Ethernet device 162 of the Ethernet devices 100 may be referred to as coordinator Ethernet device 162. The other Ethernet devices 100 may also be referred to as subscriber Ethernet devices 164, 166, 168 or follower Ethernet devices 164, 166, 168. The communication system 170 further includes a shared media 104. The shared media 104 may be formed, for example, by a twisted pair of wires. Each of the Ethernet devices 162, 164, 166, 168 may be coupled to the shared media 104 so that the Ethernet devices 162, 164, 166, 168 may communicate with each other via the shared media 104.

In an example, an Ethernet device 100, 162, 164, 166, 168 may form part of another device, in particular of another device of a vehicle. For example, an electronic control unit, an airbag unit, an anti-lock brake unit, a steering unit, or another device of the vehicle may each include an example of the Ethernet device 100, 162, 164, 166, 168. Each Ethernet device 100, 162, 164, 166, 168 may include a processing unit and/or a processing circuit.

In an example, the communication system 170 may be configured to utilize PLCA for media access to the shared media 104. The communication system 170 and/or each Ethernet device 100, 162, 164, 166, 168 may be configured to be compatible with the IEEE 802.3cg protocol, which protocol may also be referred to as 10BASE-T1S protocol. In an example, each Ethernet device 100, 162, 164, 166, 168 may be configured to provide and/or perform a communication function via the shared media 104, in particular a physical layer communication via the shared media 104, according to the 10BASE-T1S protocol.

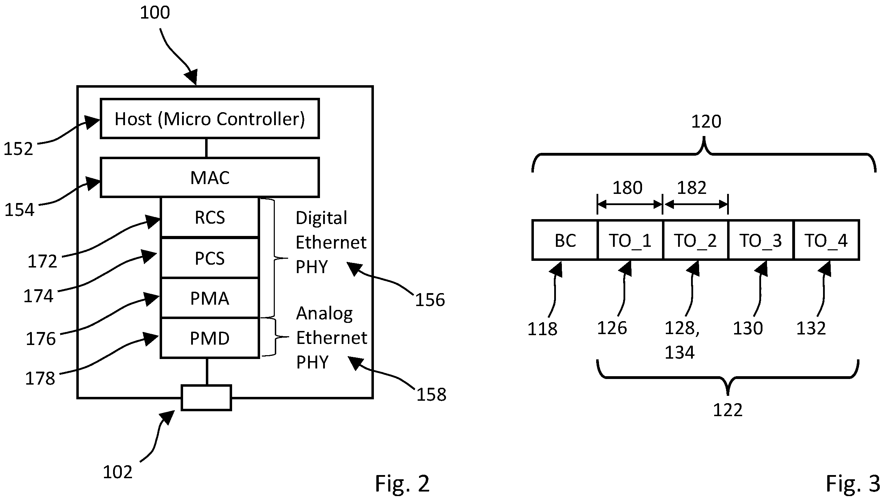

Figure 2 schematically illustrates an example of the Ethernet device 100. The Ethernet device 100 may represent an example of the coordinator Ethernet device 162 and/or an example of the follower Ethernet device 164, 166, 168. The following explanations may relate to each of the Ethernet devices 100, 162, 164, 166, 168.

Each Ethernet devices 100, 162, 164, 166, 168 may comprise a host unit 152, a MAC unit 154, a digital Phy unit 156, an analog Phy 158, and an interface 102. Each digital Phy unit 156 may comprise a RCS unit 172, a PCS unit 174. Each digital Phy unit 156 may also comprise a PMA unit 176. Each analog Phy 158 may comprise a PMD unit 178.

As indicated above, each network device 162, 164, 166, 168 may include a host unit 152. The host unit 152 may include a microprocessor. The host unit 152 may be configured to run software application. The corresponding code may be stored by host unit 152. The host unit 152 may be configured to communicate via another communication link (which is not via the shared medium 104). An example of the network device 100 may form a part of another device (not shown) that includes other components. The host unit 152 of the network device 100 may be configured to communicate with at least one of the other components of the other device via a communication link. The host unit 152 may be configured to execute the software application using the microprocessor. The host unit 152 may be configured to generate and/or transmit data packets to MAC unit 154 of the network device 100. In an example, the host unit 152 may execute the software application using the microprocessor to generate the data packet. The host unit 152 may be configured to receive data packets from MAC unit 154 of the network device 100. In an example, the host unit 152 may execute the or another software application using the microprocessor to read and/or process data represented by the received data packet.

As indicated above, each Ethernet device 100, 162, 164, 166, 168 may include a MAC unit 154. The MAC unit 154 may be implemented by the processing unit of the respective Ethernet device 100, 162, 164, 166, 168, in particular by same processing unit of the host unit 152. As an effect, the same processing unit may be utilized by both, the host unit 152 and the MAC unit 154. The MAC unit 154 may be configured to receive a data packet, in particular from the Host unit 152. The MAC unit 154 may be configured to divide a received data packet into a plurality of frames. Such a frame may also be referred to as an Ethernet frame. Once the MAC unit 154 has received a data packet and has divided the data packet into the corresponding Ethernet frames, the Ethernet device 100, 162, 164, 166, 168 may have at least one Ethernet frame ready to be sent via the shared media 104.

In principle, a collision in the transmission of different Ethernet frames, in particular from plurality of Ethernet devices 162, 164, 166, 168, via the shared media 104 should be avoided. Physical layer collision avoidance, also referred to as PLCA, may therefore be implemented by each Ethernet device 100, 162, 164, 166, 168 in accordance with IEEE 802.3cg. According to the PLCA, the transmission via the shared media 104 may be performed in cycles 120.

Figure 3 schematically illustrates an example of a cycle 120. The cycle 120 may also be referred to as arbitration cycle 120 or as AT cycle 120. The arbitration cycle 120 may comprise a beacon 118, a sequence 122 of TO time slots 126, 128, 130, 132. The sequence 122 may directly follow the beacon 118.

In an example, each Ethernet device 100, 162, 164, 166, 168 may comprise a unit 172 in the reconciliation sublayer, wherein said unit 172 is also referred to as RCS unit 172. The PLCA may be provided by the RCS unit 172 and/or may be implemented in the RCS unit 172. The RCS unit 172 may be configured to detect whether an Ethernet frame in the MAC unit 154 is ready to be sent. In an example, the RCS unit 172 may be formed by a circuit, in particular a digital circuit, and/or processing unit of the respective Ethernet device 100, 162, 164, 166, 168. The RCS unit 172 may be configured in accordance with IEEE 802.3cg.

Each Ethernet device 100, 162, 164, 166, 168, in particular the RCS unit 172 of the respective Ethernet device 100, 162, 164, 166, 168, may be configured to generate a beacon 118, which may also be referred to as first beacon 118. The first beacon 118 may comprise at least one beacon symbol or multiple beacon symbols. Each beacon symbol may comprise multiple predefined bits. If the first beacon 118 comprises multiple beacon symbols, each beacon symbol may be identical. The first beacon 118 and/or each beacon symbol may represent the beginning of a new arbitration cycle 120.

In an example, each Ethernet device 100, 162, 164, 166, 168 may include a unit in the physical coding sublayer, also referred to as PCS unit 174. In an example, the PCS unit 174 may be formed by a circuit, in particular a digital circuit, and/or processing unit of the respective Ethernet device 100, 162, 164, 166, 168. The PCS unit 174 may be configured in accordance with IEEE 802.3cg.

The RCS unit 172 of an Ethernet device 100, 162, 164, 166, 168 may be coupled to the PCS unit 172 of the respective Ethernet device 100, 162, 164, 166, 168. The first beacon 118 generated by the RCS unit 172 may be transmitted to the PCS unit 174. Each Ethernet device 100, 162, 164, 166, 168, in particular the RCS unit 172 of the respective Ethernet device 100, 162, 164, 166, 168, may be configured to synchronize in time to a new arbitration cycle 120 based on the transmitting the first beacon 118.

In an example, each Ethernet device 100, 162, 164, 166, 168 may include a physical medium attachment unit, also referred to as PMA unit 176. In an example, the PMA unit 176 may be formed by an analog circuit of the respective Ethernet device 100, 162, 164, 166, 168. The PMA unit 176 may be configured in accordance with IEEE 802.3cg.

In an example, each Ethernet device 100, 162, 164, 166, 168 may include a unit in the physical media dependent layer, also referred to as PMD unit 178. In an example, the PMD unit 178 may be formed by the analog circuit of the respective Ethernet device 100, 162, 164, 166, 168. The PMD unit 178 may be configured according to IEEE 802.3cg.

The RCS unit 172 of each Ethernet device 100, 162, 164, 166, 168 may be configured to detect whether the respective associated MAC unit 154 is ready to transmit an Ethernet frame via link of the digital Phy 156, the analog Phy 158 and the interface 102. If the MAC unit 154 of an Ethernet device 100, 162, 164, 166, 168 is ready to transmit an Ethernet frame, the RCS unit 172 of the respective Ethernet device 100, 162, 164, 166, 168 may be configured to allow transmission of the Ethernet frame only in the TO time slot 126, 128, 130, 132 associated with the respective Ethernet device 100, 162, 164, 166, 168. In addition, the RCS unit 172 of the respective Ethernet device 100, 162, 164, 166, 168 may be configured to prevent transmission of the Ethernet frame from the associated MAC unit 154 in a TO time slot 126, 128, 130, 132 that is not associated with the respective Ethernet device 100, 162, 164, 166, 168.

In an example, the first coordinator Ethernet device 162 may be assigned to the first TO time slot 126, and/or vice versa. The first follower Ethernet device 164 may be assigned to the second TO time slot 128, and/or vice versa. The second follower Ethernet device 166 may be assigned to the third TO time slot 130, and/or vice versa. The third follower Ethernet device 168 may be assigned to the fourth TO time slot 132, and/or vice versa.

The coordinator Ethernet device 162, in particular when being in a full active state, may be configured to and may have the opportunity to transmit an Ethernet frame in the first TO time slot 126 and/or during the associated time 180. If the coordinator Ethernet device 162, in particular the associated MAC unit 154, is not ready to transmit an Ethernet frame, the coordinator Ethernet device 162 may allow the first TO time slot 126 to elapse without a data transmission. If the coordinator Ethernet device 162, in particular the associated MAC unit 154, is ready to transmit an Ethernet frame, the coordinator Ethernet device 162, in particular when being in a full active state, may transmit said Ethernet frame in the first TO time slot 126 and/or during the associated time 180. The time 180 of the first TO time slot 126 may extend to the duration of the transmission of said Ethernet frame. A commit symbol may be used to initiate transmission of the Ethernet frame in the first TO time slot 126 and/or during the associated time 180. The coordinator Ethernet device 162, in particular when being in a full active state, may be configured to transmit the commit symbol at the beginning of the first TO time slot 126 and/or at the beginning of the associated time 180.

In an example, the first follower Ethernet device 164, in particular when being in a full active state, may be configured to and may have the opportunity to transmit an Ethernet frame in the second TO time slot 128 and/or during the associated time 182. If the first follower Ethernet device 164, in particular the associated MAC unit 154, is not ready to transmit an Ethernet frame, the first follower Ethernet device 164 may allow second TO time slot 128 to elapse without a data transmission. If the first follower Ethernet device 164, in particular the associated MAC unit 154, is ready to transmit an Ethernet frame, the first follower Ethernet device 164 may transmit said Ethernet frame in the second TO time slot 128 and/or during the associated time 182. The time 182 of the second TO time slot 128 may extend to the duration of the transmission of said Ethernet frame. A commit symbol may be used to initiate a transmission of the Ethernet frame in the second TO time slot 128 and/or during the associated time 182. The first follower Ethernet device 164, in particular when being in a full active state, may be configured to transmit the commit symbol at the beginning of the second TO time slot 128 and/or at the beginning of the associated time 182.

The PCS unit 174 of an Ethernet device 100, 162, 164, 166, 168 may be configured to perform data scrambling and recoding, in particular 4B5B re-coding. Each PCS unit 174 may include a PCS transmit unit and a PCS receive unit. The PCS transmit unit may include a scrambler and a unit for 4bit-5bit encoding. Each PCS receive unit may include a descrambler and a unit for 4bit-5bit decoding. In the transmit direction, each PCS unit 174 may be configured to translate data words each comprising 4 bits into data words each comprising 5 bits. The 4-bit words may be received from the RCS unit 172. The 5-bit words can be transmitted to the PMA unit 176. The 4-bit word may also be referred to as a 4-bit symbol. The 5-bit word may also be referred to as a 5-bit symbol. In the reverse direction, i.e. receive direction, the PCS unit 174 may receive 5-bit words from the PMA unit 176. In the receive direction, the PCS unit 174 may be configured to translate a 5-bit word into a 4-bit word. The 4-bit word may be transmitted to the RCS unit 172.

Each PMA unit 176 may be configured to receive, in the transmit direction, data, in particular 5-bit words, from a PCS unit 174 and generate an analog output signal based on the received data that represents the data received by the PCS unit 174. The data received by the PCS unit 174 may be represented by the digital output signal according to a predefined encoding, such as differential Manchester encoding (DME). Each PMA unit 176 may further be configured to receive, in the receive direction, an analog signal representing data. The PMA unit 176 may receive the analog signal from a PMD unit 178. The data received via the analog signal may be translated by the PMA unit 176 into 5-bit words. The 5-bit words may represent the data of the analog signal.

Each PMD unit 178 may be configured to receive an analog signal from the PMA unit 178. Each PMD unit 178 may also be configured to adapt the received analog signal in the transmit direction, in particular with respect to the length of pulses and/or the edge steepness of pulses. The PMD unit 178 may be configured to transmit the adapted analog signal via an interface 102 of the respective Ethernet device 100, 162, 164, 166, 168. The interface 102 may also be referred to as media dependent interface MDI 102 or MDI interface 102.

Each PMD unit 178 may be coupled to the interface 102 of the respective Ethernet device 100, 162, 164, 166, 168. The interface 102 may also be referred to as a media dependent interface MDI 102 or MDI interface 102. Each PMD unit 178 may be configured to detect an analog signal provided at an interface 102 of the respective Ethernet device 100, 162, 164, 166, 168. Further, the PMD unit 178 of an Ethernet device 100, 162, 164, 166, 168 may be configured to detect an analog signal provided at an interface 102 in the receive direction. As an effect, the PMD unit 178 of an Ethernet device 100, 162, 164, 166, 168 may be configured to receive an analog signal via the interface 102.

Each Ethernet device 100, 162, 164, 166, 168 may include an analog Ethernet Phy 158. The analog Ethernet Phy 158 may also be referred to as analog Phy 158. In an example, the analog Phy 158 may be formed by the circuit unit, in particular by an analog circuit, of the respective Ethernet device 100, 162, 164, 166, 168. Each analog Phy 158 may be configured to manage communication via the shared media 104, in particular according to IEEE 802.3cg. Each analog Phy 158 may be configured to receive digital data, in particular bits of an Ethernet frame, and generate an analog signal at an interface 102, which may also be referred to as a media dependent interface (MDI), representing the received digital data, in particular the bits of the Ethernet frame. Each analog Phy 158 may further be configured to receive an analog signal at the interface 102 representing digital data. Each analog Phy 158 may be configured to generate digital data, particularly in the form of Ethernet frames, based on the data received from an analog signal. Each analog Phy 158 may also be configured to protect the respective associated Ethernet device 100, 162, 164, 166, 168 from external electrical conditions, such as electrical surges, which may occur on the shared media.

Each Ethernet device 100, 162, 164, 166, 168 may include a digital Ethernet Phy 156. The digital Ethernet Phy 156 may also be referred to as digital Phy 156. In an example, the digital Ethernet Phy 156 may be formed by a digital circuit and/or by a microcontroller of the Ethernet device 100, 162, 164, 166, 168. The digital Ethernet Phy 156 may also comprise some analog circuits. The digital Ethernet Phy 156 may be configured to receive digital data and/or to transmit digital data. In an example, each Ethernet device 100, 162, 164, 166, 168 may include a digital Ethernet Phy 156 coupled between the MAC unit 154 and the analog Ethernet Phy 158. The digital Ethernet Phy 156 may be configured in an example to receive digital data, in particular representing an Ethernet frame, from the MAC unit 154. As an effect, the digital Ethernet Phy 156 may receive digital data in transmit direction. The digital Ethernet Phy 156 may be configured to generate (other) digital data based on the received digital data (also in transmit direction). The digital Ethernet Phy 156 may also be configured to transmit the generated digital data to the analog Ethernet Phy 158. A digital data processing in reverse "receive direction" may also be performed by the digital Ethernet Phy 156. The digital Ethernet Phy 156 may be configured in an example to receive digital data from the analog Ethernet Phy 158, in particular in the receiving direction. The digital Ethernet Phy 156 may be configured to generate (other) digital data based on the data received from the analog Ethernet Phy 158. In an example, the digital Ethernet Phy 156 may be configured to transmit the generated digital data to the MAC unit 154.

In an example, the digital Ethernet Phy 156 of an Ethernet device 100, 162, 164, 166, 168 may include the RCS unit 172 and the PCS unit 174. The digital Ethernet Phy 156 of the Ethernet device 100, 162, 164, 166, 168 may also include the PMA unit 176. The digital Ethernet Phy 156 may be formed by the RCS unit 172 and the PCS unit 174. In an example, the digital Ethernet Phy 156 may also be formed by the PMA unit 176.

In an example, the analog Ethernet Phy 158 of an Ethernet device 100, 162, 164, 166, 168 may include the PMD unit 178. If the PMA unit 176 is not included in the digital Ethernet Phy 156, then the analog Ethernet Phy 158 may also include the PMA unit 176. In an example, the analog Ethernet Phy 158 may be formed by the PMA unit 176. In an example, the analog Ethernet Phy 158 may also be formed by the PMD unit 178.

The RCS unit 172 may be coupled to the MAC unit 154 (of the respective Ethernet device 100, 162, 164, 166, 168). The RCS unit 172 may be coupled between the MAC unit 154 and the PCS unit 174. The PMA unit 176 may be coupled between the PCS unit 174 and the PMD unit 178. The PMD unit 178 may be coupled to the PMA unit 176. The PMD unit 178 of the analog Ethernet Phy 158 may be coupled to the interface 102 of the Ethernet device 100. In another example, the interface 102 may be an integral part of the PMD unit 178.

The coordinator Ethernet device 162, in particular when being in the full active state, may be configured to generate a signal at the associated interface 102 that represents the first beacon 118. The signal representing the first beacon 118 may reach the interfaces 102 of each follower Ethernet device 164, 166, 168 via the shared media 104. The RCS unit 172 of each follower Ethernet device 164, 166, 168, in particular when being in full active mode may be configured to detect the start of the new arbitration cycle 120 in response to receiving the first beacon 118.

In an example, an arbitration cycle 120 comprises a beacon 118, a sequence 122 of fields 126, 128, 130, 132, each referred to as TO time slot 126, 128, 130, 132. Each TO time slot 126, 128, 130, 132 may represent a transmit opportunity. Each TO time slot 126, 128, 130, 132 may be assigned to exactly one of the Ethernet devices 162, 164, 166, 168, so that a unique assignment is predefined between each TO time slot 126, 128, 130, 132 and the assigned Ethernet device 100, 162, 164, 166, 168. Each Ethernet device 100, 162, 164, 166, 168 may be uniquely assigned to exactly one TO time slot 126, 128, 130, 132. As an effect, there may be a bijective mapping between the TO time slots 126, 128, 130, 132 and the Ethernet devices 162, 164, 166, 168.

Each Ethernet device 100, 162, 164, 166, 168 may have stored to which TO time slot 126, 128, 130, 132 the respective Ethernet device 100, 162, 164, 166, 168 is assigned.

To transmit an Ethernet frame from an Ethernet device, in particular the coordinator Ethernet device 162, to another Ethernet device, in particular the first follower Ethernet device 164, so that the payload data represented by the Ethernet frame can be processed by the host unit 152 of the follower Ethernet device 164, it may require in an example that both, the coordinator Ethernet device 162 and the follower Ethernet device 164, are in a full active state 148. In the full active state 148, each Ethernet device 100, 162, 164, 166, 168, in particular each of the coordinator Ethernet device 162 and the follower Ethernet device 164, consume the most electrical power. To save electrical energy, it may be useful to put at least one unused Ethernet device 100, 162, 164, 166, 168, in particular several follower Ethernet devices 164, 166, 168, into an idle state 108 or into a state, where less energy is consumed. In the idle state 108 or in said other state, a follower Ethernet device 164, 166, 168 consumes less electrical energy than in the full active state 148.

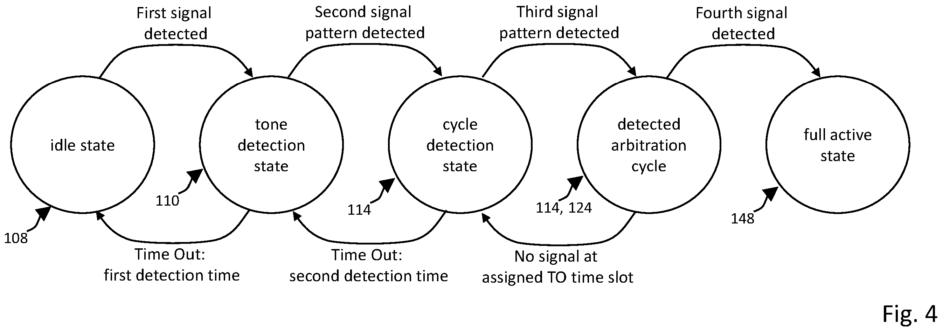

Figure 4 schematically illustrates an example of a state diagram that schematically represents multiple states 108, 110, 114, 148 of an example of an Ethernet device 100, 162, 164, 166, 168.

A challenge may be a selective wake-up of a single Ethernet device 100, in particular of a single follower Ethernet device 164, 166, 168. In an idle state 108 of an Ethernet device 100, 162, 164, 166, 168, the host unit 152, the MAC unit 154, and the digital Ethernet Phy 156 of the respective Ethernet device 100, 162, 164, 166, 168 may be deactivated. A first approach to wake up a selected Ethernet device 100, 162, 164, 166, 168 may be to wake up all Ethernet devices 100, 162, 164, 166, 168 coupled via a shared media 104, and to subsequently put one or more Ethernet devices 100, 162, 164, 166, 168 back into the idle state 108 that do not belong to the at least one Ethernet device 100, 162, 164, 166, 168 that should actually be woken up. As an effect, at least one Ethernet device 100, 162, 164, 166, 168 remains in the full active state 148, while the other Ethernet devices are (again) in the tone detection state 110 or in the idle state 108. However, the first approach has the disadvantage that all Ethernet devices 100, 162, 164, 166, 168 coupled to the shared media 104 are initially set to the full active state 148, so that, at least for a certain time, each of the Ethernet devices 100, 162, 164, 166, 168 consumes electrical energy as if each were in the full active state.

The present publication is based on the second approach, according to which an Ethernet device 100, 162, 164, 166, 168 may be changed stepwise in several successive states from the idle state 108 to the full active state 148. In an example, the second approach may offer the possibility to prevent all Ethernet devices 100, 162, 164, 166, 168 from changing to the full active state first, just to comply with the need that a single selected Ethernet device 100, 162, 164, 166, 168 should actually be woken up. The second approach may provide the possibility that the stepwise transition from idle state 108 to full active state 148 may be interrupted for at least one of the plurality of Ethernet devices 100, 162, 164, 166, 168 being coupled to the same shared media 104. For a particular Ethernet device 100, 162, 164, 166, 168 that is not supposed to be woken up, the change from idle state 108 to full active state 148 may be interrupted in a state between the idle state 108 and full active state 148. As this particular Ethernet device 100, 162, 164, 166, 168 may not reach the full active state 148, electrical energy can be saved. As another effect, the energy consumption of an Ethernet system 170 comprising a plurality of Ethernet devices 100, 162, 164, 166, 168, wherein each Ethernet devices 100, 162, 164, 166, 168 being coupled to the shared media 104, may be reduced.

In the following, an Ethernet device 100, 162, 164, 166, 168 is explained that can change from the idle state 108 to the full active state 148 in a series of several successive states. An example of the states 108, 110, 114, 148 is schematically illustrated in Figure 4. For each Ethernet device 100, 162, 164, 166, 168, reference may be made to the previous explanations, advantageous features, technical effects and advantages in an analogous manner as explained in the previous sections of the present publication in connection with the Ethernet device 100, 162, 164, 166, 168.

The Ethernet device 100, 162, 164, 166, 168 comprises the interface 102. The interface 102 may also be referred to as the network interface 102. The interface 102 may be configured to be coupled to the shared media 104. The shared media 104 may be formed by a twisted pair of wires. The Ethernet device 100, 162, 164, 166, 168 may be configured as a Ethernet node in accordance with the 10BASE-T1S protocol.

The Ethernet device 100, 162, 164, 166, 168, if in an idle state 108, may be configured to receive a signal via the interface 102. The signal may be referred to as the first signal. The first signal may be any signal. However, the first signal should not be noise. In an example, the first signal may be understood as a signal that represents data and/or that comprises a pulse-shaped signal waveform, wherein the amplitude of at least one pulse is greater than a predefined threshold. The threshold may be in the range between 0,1 Volt and 5 Volt or in the range between -0,1 Volt and -5 Volt. The threshold may relate to a differential voltage.

In an example, the Ethernet device 100, 162, 164, 166, 168 may comprise the host unit 152, the MAC unit 154, the digital Ethernet Phy 156, and the analog Ethernet Phy 158. If the Ethernet device 100, 162, 164, 166, 168 is in the idle state 108, then each of its host unit 152, its MAC unit 154, and its digital Ethernet Phy 156 may be deactivated. Such a deactivation significantly reduces the energy consumption of Ethernet device 100, 162, 164, 166, 168. Only the analog Ethernet Phy 158 may be active in an example if the Ethernet device 100, 162, 164, 166, 168 is in the idle state 108. The analog Ethernet Phy 158 may be formed by an analog circuit of the Ethernet device 100, 162, 164, 166, 168. As an effect, the analog Ethernet Phy 158 may have a small power consumption. The analog Ethernet Phy 158 may be coupled to the interface 102 or the interface 102 may be integrated into the analog Ethernet Phy 158. The analog Ethernet Phy 158 may be configured to receive the first signal via the interface 102 even in the idle state 108 of the Ethernet device 100, 162, 164, 166, 168.

In an example, the analog Ethernet Phy 158 may not be configured to detect whether to activate the MAC unit 154 and the host unit 152 based on the first signal. The first signal may be any signal transmitted over the shared media 104, in particular except for noise. In an example, the first signal may be used to transmit payload data. If the first signal is transmitted over the shared media 104, then there is a chance that the Ethernet device 100, 162, 164, 166, 168 can participate in the communication over the shared media 104. As an effect, the first signal may be interpreted as an indicator to indicate that the Ethernet device 100, 162, 164, 166, 168 may be used in the near future.

The Ethernet device 100, 162, 164, 166, 168 is configured to change from the idle state 108 to a further state, also referred to as the tone detection state 110, in response to the detection of the first signal. The idle state 108 of the Ethernet device 100, 162, 164, 166, 168 and the tone detection state 110 of the Ethernet device 100, 162, 164, 166, 168 are different states.

In idle state 108, the Ethernet device 100, 162, 164, 166, 168 may be configured to detect the first signal. In an example, however, the Ethernet device 100, 162, 164, 166, 168 is not configured in idle state 108 to detect whether the first signal comprises a predefined pattern. In the idle state 108, the Ethernet device 100, 162, 164, 166, 168 may only detect that either no signal is detected via the interface 102 or that the first signal, in particular as an arbitrary signal representing data, is detected via the interface 102. In an example, the Ethernet device 100, 162, 164, 166, 168 in the idle state 108 lacks the ability to detect a pattern of a received signal. By changing from the idle state 108 to the tone detection state 110, in an example further parts of the Ethernet device 100, 162, 164, 166, 168, in particular further parts of the analog Ethernet Phy 158, may be activated to enable the detection of a signal pattern of a signal.

If the Ethernet device 100, 162, 164, 166, 168 is in the tone detection state 110, then the Ethernet device 100, 162, 164, 166, 168 is configured to detect a predefined signal pattern of a second signal that the Ethernet device 100, 162, 164, 166, 168 may receive via the interface 102. Said signal pattern may also be referred to as second signal pattern. As an effect, the Ethernet device 100, 162, 164, 166, 168 may be configured in the tone detection state 110 to detect the second signal pattern via the interface 102.

If reference is made to the second signal pattern below, the second signal pattern may be understood in an example in this context as a predefined signal pattern of a second signal. The second signal and the first signal may be different signals. The second signal may be transmitted over the shared media 104 after the first signal in time. In an example, the second signal may immediately follow the first signal. In an example, the second signal pattern may be a predefined sequence of predefined pulses of the second signal. As an effect, the sequence of the pulses of the second signal may be predefined to form the second signal pattern. In an example, the second signal pattern may be predefined such that the second signal pattern represents a predefined sequence of predefined bits. The predefined sequence of predefined bits may form a predefined data field.

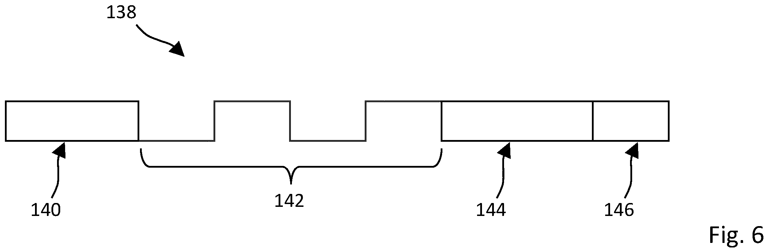

In an example, the second signal pattern may represent a wake-up tone 142 and/or be formed by a wake-up tone 142. Figure 6 schematically illustrates an example of a wake-up pattern 138. In an example, the wake-up pattern 138 may be formed from a predefined sequence of a suspend field 140, the wake-up tone 142, a commit field 144, and an EOF field 146. The suspend field 140, the commit field 144, and the EOF field 146 may each represent a dedicated sequence of predefined bits. In an example, the wake-up pattern 138 may be configured according to the "WUP" of the Open Alliance 10BASE-T1S Sleep/Wake-up Specification.

In an example, the Ethernet device 100 may be configured to receive the second signal via the interface 102. The Ethernet device 100, if in the tone detection state 110, may be configured to detect the wake-up tone 142 represented by the second signal as the second signal pattern. In an example, the second signal pattern is not configured specifically for a single Ethernet device 100, 162, 164, 166, 168 of the plurality of Ethernet devices 100, 162, 164, 166, 168. The second signal pattern may, in an example, represent a wake-up tone 142 that represents a general instruction to wake up.

It was explained in an example earlier that only the analog Ethernet Phy 158 of the Ethernet device 100, 162, 164, 166, 168 is activated if the Ethernet device 100, 162, 164, 166, 168 is in the idle state 108, wherein the digital Ethernet Phy 156, the MAC unit 154, and the host unit 152 are deactivated if the Ethernet device 100, 162, 164, 166, 168 is in the idle state 108. In an example, the analog Phy unit 158 is configured to detect the first signal via the interface 102.

The detection of the first signal may cause the Ethernet device 100, 162, 164, 166, 168 to change from the idle state 108 to the tone detection state 110. In addition, the Ethernet device 100, 162, 164, 166, 168 may be configured to change the configuration of the Ethernet analog Phy 158 with the change to the tone detection state 110 so that the Ethernet analog Phy 158, if the Ethernet device 100, 162, 164, 166, 168 is in the tone detection state 110, is configured to detect the second signal pattern. In an example, if the Ethernet device 100, 162, 164, 166, 168 is in the tone detection state 110, the analog Ethernet Phy 158 may be configured to detect the wake-up tone 142 as the second signal pattern. The wake-up tone 142 may be represented by the second signal. In an example, the analog Ethernet Phy 158 may receive the second signal, in particular the wake-up tone 142, via the interface 102. When changing from the idle state 108 to the tone detection state 110, the analog Ethernet Phy 158 may remain active . As an effect, the analog Ethernet Phy 158 may also remain activated in the tone detection state 110 of the Ethernet device 100, 162, 164, 166, 168. In an example, the Ethernet device 100, 162, 164, 166, 168 may be configured such that the digital Ethernet Phy 156, the MAC unit 154, and the host unit 152 also remain deactivated when changing from the idle state 108 to the tone detection state 110. As an effect, the digital Ethernet Phy 156, the MAC unit 154, and the host unit 152 may be deactivated in the tone detection state 110.

A power consumption of the analog Ethernet Phy 158 may be lower in the idle state of the Ethernet device 100, 162, 164, 166, 168 than in the tone detection state 110. As an effect, the power consumption of the Ethernet device 100, 162, 164, 166, 168 may be lower in the idle state 108 than in the tone detection state 110. As long as no signal transmission takes place over the shared media 104, the analog Ethernet Phy 158 and/or the Ethernet device 100, 162, 164, 166, 168 may remain in the idle state 108, so that very little energy is consumed. The change from the idle state 108 to the tone detection state 110 is only performed if a signal is actually transmitted over the shared media 104. The signal transmission allows the Ethernet device 100, 162, 164, 166, 168 to change from the idle state 108 to the tone detection state 110. In the tone detection state 110, the energy consumption of the analog Ethernet Phy 158 and/or the Ethernet device 100, 162, 164, 166, 168 is greater than in the idle state 108. However, the comparatively greater energy consumption in the tone 110 may be acceptable because a signal transmission has previously taken place over the shared media 104 and this signal transmission may be an indication that a second signal comprising the second signal pattern may be transmitted soon. In the tone detection state 110 of the Ethernet device 100, 162, 164, 166, 168, the second signal pattern may be detected by the Ethernet device 100, 162, 164, 166, 168, in particular by the analog Ethernet Phy 158. As an effect, the transmission of the second signal pattern is not lost, although the Ethernet device 100, 162, 164, 166, 168 previously consumed little energy in the idle state.

It was explained above that the transmission of Ethernet frames between a plurality of Ethernet devices 100, 162, 164, 166, 168 may be performed in accordance with an arbitration cycle 120, if the Ethernet devices 100, 162, 164, 166, 168 are in the full active state. An example of the arbitration cycle 120 is shown schematically in Figure 3. The arbitration cycle 120 starts with a predefined start symbol 118. The start symbol 118 is followed by a series 122 of a plurality of TO time slots 126, 128, 130, 132. Each Ethernet device 100, 162, 164, 166, 168 is uniquely assigned to exactly one TO time slot 126, 128, 130, 132. Conversely, each TO time slot 126, 128, 130, 132 may be uniquely assigned to exactly one Ethernet device 100, 162, 164, 166, 168. As a result, there may be a one-to-one mapping between the Ethernet devices 100, 162, 164, 166, 168 and the TO time slots 126, 128, 130, 132. As a result, each Ethernet device 100, 162, 164, 166, 168 is assigned to a single TO time slot 134 (of the plurality of TO time slots 126, 128, 130, 132) as the reference TO time slot 134. In an example, Ethernet device 162 may be assigned to TO time slot 126 as its reference TO time slot. In an example, Ethernet device 164 may be assigned to TO time slot 128 as its reference TO time slot 134. In an example, Ethernet device 166 may be assigned to TO time slot 130 as its reference TO time slot. In an example, Ethernet device 168 may be assigned to TO time slot 132 as its reference TO time slot.

As will be explained later in this publication, the arbitration cycle 120 also offers the new option of using the arbitration cycle 120 to selectively wake up individual Ethernet devices 100, 162, 164, 166, 168. As an effect, the arbitration cycle 120 may be used in two ways: on the one hand for the selective wake-up of individual Ethernet devices 100, 162, 164, 166, 168 and on the other hand for the distribution and advantageous utilization of the bandwidth for the transmission of data via the shared media 104. For the selective wake-up of individual Ethernet devices 100, 162, 164, 166, 168, it should be prevented that other Ethernet devices 100, 162, 164, 166, 168 that are not selectively selected for wake-up are first fully activated and then returned to the idle state.

A (new) arbitration cycle 120 starts with the predefined start symbol 118. The start symbol 118 of the arbitration cycle 120 may be a beacon symbol. The beacon symbol may be the beacon symbol according to the 10BASE-T1S protocol. The start symbol 118 may be the leading symbol 118 of the arbitration cycle 120. In an example, the use of the arbitration cycle 120 may be considered more complex than the detection of the first signal or the detection of the second signal pattern. Therefore, in order to be able to use the arbitration cycle 120 for the full wake-up of an Ethernet device 100, 162, 164, 166, 168, it may be advantageous to change the Ethernet device 100, 162, 164, 166, 168 beforehand to another state, also referred to as a cycle detection state, so that the Ethernet device 100, 162, 164, 166, 168 is able to detect the start of a new arbitration cycle 120. The detected second signal pattern may be used in an example to trigger the change from the tone detection state 110 to the cycle detection state 114.

The Ethernet device 100, 162, 164, 166, 168 is configured to change from the tone detection state 110 to the cycle detection state 114 in response to the detection of the second signal pattern. The tone detection state 110 and the cycle detection state 114 of the Ethernet device 100, 162, 164, 166, 168 are different states.

In an example, the cycle detection state 114 of the Ethernet device 100, 162, 164, 166, 168 is used to enable the Ethernet device 100, 162, 164, 166, 168 to detect the start of a new arbitration cycle 120 and, subsequently, also to detect whether a signal is transmitted during the dedicated TO time slot 126, 128, 130, 132 that is uniquely assigned to the Ethernet device 100, 162, 164, 166, 168. The transmission of a signal at the assigned TO time slot may correspond to an instruction form the respective Ethernet device to fully wake up and/or to change to the full active state. As an effect, a selected wake-up for the Ethernet device 100, 162, 164, 166, 168 may be provided.

In an example, the Ethernet device 100, 162, 164, 166, 168 is not configured in the tone detection state 110 to detect the start symbol 118 of a new arbitration cycle 120. In an example, the Ethernet device 100, 162, 164, 166, 168, if in the tone detection state 110, may also lack the ability to detect whether no signal was transmitted to the Ethernet device 100, 162, 164, 166, 168 during the assigned TO time slot 126, 128, 130, 132 or a signal was transmitted to the Ethernet device 100, 162, 164, 166, 168 during the assigned TO time slot 126, 128, 130, 132. To overcome the challenges mentioned, the Ethernet device 100, 162, 164, 166, 168 may be changed from the tone detection state 110 to the cycle detection state 114 in response to the detection of the second signal pattern.

In the tone detection state 110 of the Ethernet device 100, 162, 164, 166, 168, the analog Ethernet Phy 158 may be enabled while the digital Ethernet Phy 156 is disabled. Via the interface 102, the analog Ethernet Phy 158 can receive a second signal comprising the second signal pattern. If the Ethernet device 100, 162, 164, 166, 168 is in the tone detection state 110, then the analog Ethernet Phy 158 of an Ethernet device 100, 162, 164, 166, 168 may be configured in an example to detect the second signal pattern. After the second signal pattern is detected while the Ethernet device is in the tone detection state 110, the Ethernet device 100, 162, 164, 166, 168 may be configured to activate the digital Ethernet Phy 156 in response to the detection of the second signal pattern. In an example, the analog Ethernet Phy 158 may be coupled to the digital Ethernet Phy 156 such that the analog Ethernet Phy 158 may control the digital Ethernet Phy 156 to activate the digital Ethernet Phy 156. Activating the digital Ethernet Phy 156 may cause the Ethernet device 100, 162, 164, 166, 168 to change from the tone detection state 110 to the cycle detection state 114.

If the Ethernet device 100, 162, 164, 166, 168 is in the cycle detection state 114, then the Ethernet device 100, 162, 164, 166, 168 is configured to detect a predefined third signal pattern. The third signal pattern may be a signal pattern from a third signal that the Ethernet device 100 can receive via the interface 102. The third signal pattern may represent the predefined start symbol 118 of an arbitration cycle 120. By changing to the cycle detection state 114, the Ethernet device 100, 162, 164, 166, 168 may be subject to a configuration change to become able to detect the third signal pattern representing the predefined arbitration cycle 120 start symbol 118. As an effect, the Ethernet device 100, 162, 164, 166, 168 may become able to detect the start of a new arbitration cycle 120. The start symbol 118 of the arbitration cycle 120 may be a commit symbol. The commit symbol may consist of a series of predefined bits. The commit symbol may be predefined according to the 10BASE-T1S protocol.

In an example, the RCS unit 172 of the digital Ethernet Phy 156 may be configured to detect the start symbol of the arbitration cycle 120 based on the third signal pattern. Based on the detection of the start symbol 118, the RCS unit 172 and/or the Ethernet digital Phy 156 may synchronized to the arbitration cycle 120. In an example, the arbitration cycle 120 may consist of the start symbol 118 and a series of a predefined number of TO time slots 126, 128, 130, 132. The RCS unit 172 may store which TO time slot 126, 128, 130, 132 that is uniquely assigned to the Ethernet device 100, 162, 164, 166, 168. For example, the RCS unit 172 of the Ethernet device 164 may store that the TO time slot 128 assigned to the Ethernet device 164. The time slot 126, 128, 130, 132 uniquely assigned to an Ethernet device 100, 162, 164, 166, 168 may be referred to as the reference TO time slot 134. With respect to the example in connection with the Ethernet device 164, the TO time slot 128 may be understood as the reference TO time slot 134 for the respective Ethernet device 164. The RCS unit 172 of the Ethernet device 164 may have stored in an example that the TO time slot 128 is the relevant reference TO time slot 134.

The following explanations may be based on the idea that, for example, the Ethernet device 164 may be configured to monitor the interface 102 in order to capture any potential signal at the interface 102 during the reference TO time slot in order to detect if a fourth signal is received via the interface 102 of the Ethernet device 164 during the reference TO time slot 134. If no fourth signal is received via the interface 102 of the Ethernet device 164 in the reference TO time slot 134, then the Ethernet device 164 may remain in the cycle detection state 114. But if the fourth signal is received during the reference TO time slot 134 via the interface 102 of the Ethernet device 164, then the Ethernet device 164 may change in an example from the cycle detection state 114 to the full active state 148. In an example, the Ethernet device 164 may be configured to ignore possible signals transmitted to the interface 102 of the Ethernet device 164 in one of the other TO time slots 126, 130, 132 other than the reference TO time slot 134. For example, if the fourth signal is transmitted in the TO time slot 126 (and thus not in the reference TO time slot 134) to the interface 102 of the Ethernet device 164, then the Ethernet device 164 may ignore the fourth signal transmitted in the unassigned TO time slot 126.

Against this background, the Ethernet device 100, 162, 164, 166, 168, if it is in the cycle detection state 114, is configured to detect the fourth signal transmitted during the reference TO time slot 134, which is uniquely assigned to the Ethernet device 100, 162, 164, 166, 168. The fourth signal may be present at any time during the reference TO time slot 134. The duration (in time) of the fourth signal may be less than the reference TO time slot 134.

As shown schematically in Figure 4 in an example, the Ethernet device 100, 162, 164, 166, 168 may be configured in the cycle detection state 114 to first detect the predefined third signal pattern representing the start symbol 118 of a new arbitration cycle 120 and then to detect the fourth signal during the reference TO time slot 134 of the arbitration cycle 120. As an effect, the Ethernet device 100, 162, 164, 166, 168 in the cycle detection state 114 may be able to detect that a new arbitration cycle 120 has begun by detecting the third signal pattern. In Figure 4, the corresponding sub-state is schematically represented by the detected arbitration cycle 124. The detected arbitration cycle 124 comprises the start symbol 118 and a series of TO time slots 126, 128, 130, 132. One of the TO time slots 126, 128, 130, 132 of the series 122 of the TO time slots 126, 128, 130, 132 is the reference TO time slot 134. In an example, the reference TO time slot 134 is uniquely assigned to a single Ethernet device 100, 162, 164, 166, 168, in particular the Ethernet device 164.

The Ethernet device 100, 162, 164, 166, 168, in particular the Ethernet device 164, may be configured to remain in the cycle detection state 114 if the fourth signal is transmitted during an un-assigned TO time slot 126, 130, 132 to the respective Ethernet device 100, 162, 164, 166, 168, in particular to the Ethernet device 164. As an effect, each Ethernet device 100, 162, 164, 166, 168 that is in the cycle detection state 114 may be configured, in an example, to ignore a fourth signal transmitted during a TO time slot 126, 130, 132 to the respective Ethernet device 100-1 68, in particular to the Ethernet device 164, if said fourth signal is not transmitted in the reference TO time slot 134 but in one of the other TO time slots 126, 130, 132 of the arbitration cycle 120. Each of the plurality of Ethernet devices 100, 162, 164, 166, 168 may be uniquely assigned to a different TO time slot.

The Ethernet device 100, 162, 164, 166, 168, in particular the Ethernet device 164, is configured to change from the cycle detection state 114 to a full active state 148 in response to the detection of the fourth signal transmitted to the Ethernet device during its assigned reference TO time slot 134.

In the full active state 148, the Ethernet device 100, 162, 164, 166, 168 may be fully operational. In an example, the MAC unit 154 and the host unit 152 of an Ethernet device 100, 162, 164, 166, 168 may be activated if the Ethernet device 100, 162, 164, 166, 168 is in the full active state 148. In an example, the Ethernet device 100, 162, 164, 166, 168 may be configured to activate its MAC unit 154 and its host unit 152 in response to detecting the fourth signal transmitted to the Ethernet device 100, 162, 164, 166, 168 during the reference TO time slot 134, such that the activation of the MAC unit 154 and the activation of the host unit 152 resulting in the change of the Ethernet device 100, 162, 164, 166, 168 from the cycle detection state 114 to the full active state 148.

In an example, the RCS unit 172 may be coupled to the MAC unit 154. The RCS unit 172 may be configured to control the MAC unit 154. In an example, the RCS unit 172 may be configured to activate the MAC unit 154 and/or the host unit 152 in response to detecting the fourth signal transmitted to the Ethernet device 100, 162, 164, 166, 168 during the reference TO slot 134. In an example, the MAC unit 154 may be configured to activate the host unit 152 upon being controlled to be activated through the RCS unit 172.

As an effect, the MAC unit 154 and the host unit 152 are activated by an Ethernet device 100, 162, 164, 166, 168 only for the case if the fourth signal is transmitted during the reference TO time slot 134, which is uniquely assigned to the respective Ethernet device 100, 162, 164, 166, 168. As a further effect, the MAC unit 154 and the host unit 152 are not activated by the said Ethernet device 100, 162, 164, 166, 168 if the fourth signal is not transmitted during the reference TO time slot 134. As an even further effect, through the transmission of the fourth signal, specifically in a selected TO time slot 128, in particular in the reference TO time slot 134, it may be achieved that only the single Ethernet device 164 assigned to the respective TO time slot 134 is fully activated. For the other Ethernet devices 162, 166, 168, the selected TO time slot 128 (or reference TO time slot 134) is not the assigned reference TO time slot 126, 130, 132, so that the transmission of the fourth signal during the selected TO time slot 128 (or during the reference TO time slot 134) may be ignored by the other devices 162, 166, 168. As an effect, the said fourth signal does not cause the other Ethernet devices 162, 166, 168 to change from the cycle detection state 114 to the full active state 148, but the other Ethernet devices 162, 166, 168 remain in their current state, for example in the cycle detection state 114.

The preceding disclosure showed that the arbitration cycle can also be used in connection with selective wake-up of an Ethernet device 100, 162, 164, 166, 168. As an effect, selected Ethernet devices 100, 162, 164, 166, 168 may be selectively woken up one after the other in the arbitration cycle 120. The advantage of selective wake-up is that energy can be saved when operating an Ethernet system 170.

It was explained earlier that the Ethernet device 100, 162, 164, 166, 168, if in the cycle detection state 114, is configured to detect the fourth signal during the assigned reference TO slot 134. In principle, the fourth signal may be any signal. However, the fourth signal should not be noise. In an example, the fourth signal may be configured to represent data. In an example, the fourth signal may comprise a plurality of pulses, wherein the amplitude of at least one of the pulses is greater than a predefined threshold. The threshold may be in the range between 0,1V and 5V or in the range between -0,1V and -5V. The threshold may relate to a differential voltage.

In an example, the fourth signal comprises a fourth signal pattern. The fourth signal pattern may be predefined. In an example, the foregoing explanations, advantageous features, technical effects and/or advantages as explained in connection with the fourth signal may apply in an analogous manner to the fourth signal pattern. As an effect, a signal in an example may be understood in an example as the fourth signal only if the fourth signal comprises the fourth signal pattern. In reference to this example, if the Ethernet device 100, 162, 164, 166, 168 is in the cycle detection state 114, it may be configured to detect the fourth signal pattern of the fourth signal transmitted to the Ethernet device 100, 162, 164, 166, 168 during the reference TO time slot 134. The Ethernet device 100, 162, 164, 166, 168 may be configured to change from the cycle detection state 114 to the full active state 148 in response to the detection of the fourth signal pattern of the fourth signal transmitted during the reference TO time slot 134 to the Ethernet device 100, 162, 164, 166, 168. If the transmitted signal in an example comprises a different signal pattern rather than the fourth signal pattern, then the Ethernet device 100, 162, 164, 166, 168 may remain in the cycle detection state 114. By using a predefined fourth signal pattern for the fourth signal, the selective control to change to the full active state 148 may be particularly robust against errors, in particular noise.

In an example, the active digital Ethernet Phy 156 (or the active associated PCS unit 172), in particular if the Ethernet device is in the cycle detection state 114, may be configured to detect the fourth signal pattern of the fourth signal transmitted to the Ethernet device 100, 162, 164, 166, 168 during reference TO time slot 134. The active Ethernet digital Phy 156 (or the associated PCS unit 172) may be configured in an example to activate the MAC unit 154 or both the MAC unit 154 and the host unit 152 in response to detection of the fourth signal pattern. In an example, by activating the MAC unit 154 and/or by activating the host unit 152, the Ethernet device 100, 162, 164, 166, 168 changes from cycle detection state 114 to full active state 148.

Figure 4 schematically illustrates an example of a state diagram for the Ethernet device 100, 162, 164, 166, 168. It shall be assumed for the following explanation that the Ethernet device 100, 162, 164, 166, 168 is in the tone detection state 110. It was explained earlier that the Ethernet device 100, 162, 164, 166, 168, if in the tone detection state 110, may change from the tone detection state 110 to the cycle detection busy state 114 in response to the detection of the second signal pattern. But it may happen that the second signal pattern is not transmitted for a long time. In this case, it may be advantageous for the Ethernet device 100, 162, 164, 166, 168 to change back to the idle state 108. The Ethernet device 100, 162, 164, 166, 168, if in the tone detection state 110, may be configured to change to the idle state 108 in response, if the Ethernet device 100, 162, 164, 166, 168 does not detect a signal, in particular the second signal pattern, during a predefined first detection time after changing to the tone detection state 110. In an example, the predefined first detection time may be understood as a time limit (time out) that directly follows the change of the Ethernet device 100, 162, 164, 166, 168 from the idle state 108 to the tone detection state 110. If the Ethernet device 100, 162, 164, 166, 168 does not detect a signal or does not detect the second signal pattern in the tone detection state 110, then in an example, the Ethernet device 100, 162, 164, 166, 168 may automatically change back to the idle state 108. Additional energy may be saved by changing to the idle state 108.

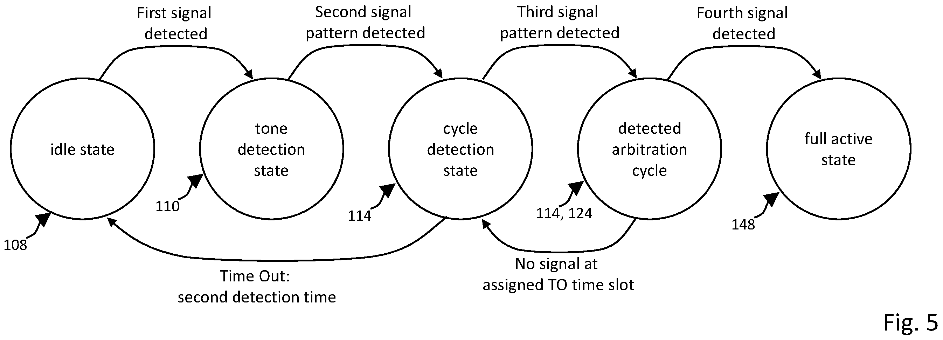

In connection with Figure 4, it is again assumed that the Ethernet device 100, 162, 164, 166, 168 is in the cycle detection state 114. It was explained earlier that the Ethernet device 100, 162, 164, 166, 168, if in the cycle detection state 114, can detect the third signal pattern that represents a start symbol 118 of a new arbitration cycle 120. It may be the case that the third signal pattern is not transmitted for a long time. As an effect, the absence of transmission of the third signal pattern may indicate that no new arbitration cycle 120 has started for a long time. In this case, it may be advantageous for the Ethernet device 100, 162, 164, 166, 168 to change back to the tone detection state 110. The Ethernet device 100, 162, 164, 166, 168, when in cycle detection state 114, may be configured to change to the tone detection state 110 in response if the Ethernet device 100, 162, 164, 166, 168 does not detect a third signal pattern during a predefined second detection time after changing to the cycle detection state. In an example, the predefined second detection time may be understood as a time limit that directly follows the change of the Ethernet device 100, 162, 164, 166, 168 from the tone detection state 110 to the cycle detection state 114. If the Ethernet device 100, 162, 164, 166, 168 in the cycle detection state 114 does not detect the third signal pattern, then the Ethernet device 100, 162, 164, 166, 168 may be configured to automatically change back to the tone detection state 110 in an example. Additional energy can be saved by changing to the tone detection state 110. Alternatively, instead of changing back to the tone detection state 110, the Ethernet device 100, 162, 164, 166, 168 may be configured to skip the tone detection state 110 and instead change to the idle state 108. Such an example is schematically illustrated in connection with Figure 5.

In an example, instead of the predefined second detection time, another criterion may be used, for example, a predefined number of arbitration cycles 120, where the Ethernet device 100, 162, 164, 166, 168 has not detected the fourth signal or the fourth signal pattern in any of said arbitration cycles 120. Even in such a case, the Ethernet device 100, 162, 164, 166, 168 may be configured in an example to automatically change back to the tone detection state 110 or to the idle state 108. As an effect, additional energy may be saved.

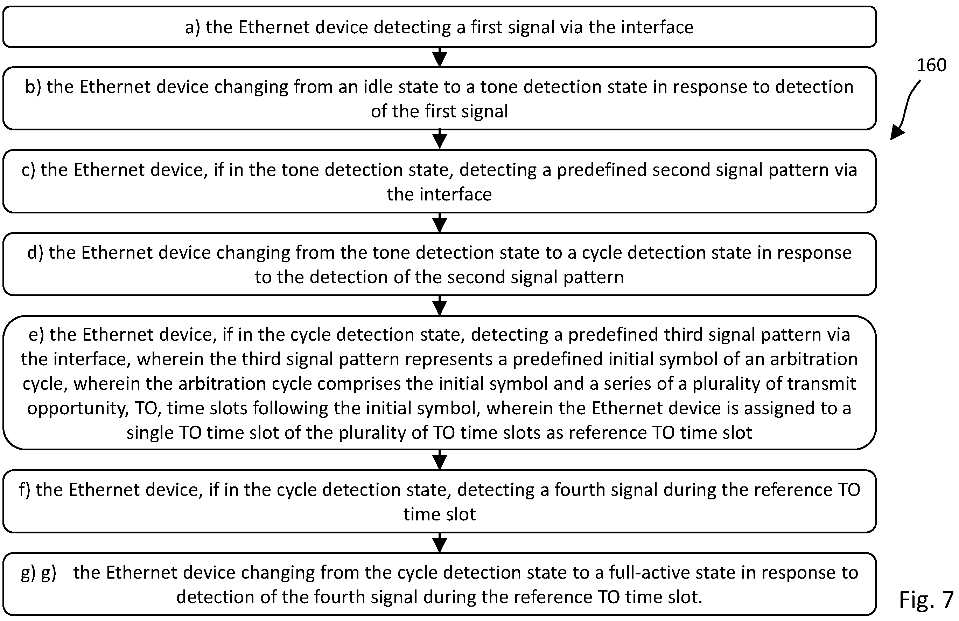

Figure 7 schematically shows an example of a method 160 for the Ethernet device 100, 162, 164, 166, 168. The method 160 may be comprised of the following steps:
a) the Ethernet device 100, 162, 164, 166, 168 detecting a first signal via the interface 102,
b) the Ethernet device 100, 162, 164, 166, 168 changing from an idle state 108 to a tone detection state 110 in response to detection of the first signal,
c) the Ethernet device 100, 162, 164, 166, 168, if in the tone detection state 110, detecting a predefined second signal pattern via the interface 102,
d) the Ethernet device 100, 162, 164, 166, 168 changing from the tone detection state 110 to a cycle detection state 114 in response to the detection of the second signal pattern,
e) the Ethernet device 100, 162, 164, 166, 168, if in the cycle detection state 114, detecting a predefined third signal pattern via the interface 102, wherein the third signal pattern represents a predefined initial symbol 118 of an arbitration cycle 120, wherein the arbitration cycle 120 comprises the initial symbol 118 and a series 122 of a plurality of transmit opportunity, TO, time slots 126, 128, 130, 132 following the initial symbol 118, wherein the Ethernet device 100, 162, 164, 166, 168 is assigned to a single TO time slot of the plurality of TO time slots as reference TO time slot 134,
f) the Ethernet device 100, 162, 164, 166, 168, if in the cycle detection state 114, detecting a fourth signal during the reference TO time slot 134, and
g) the Ethernet device 100, 162, 164, 166, 168 changing from the cycle detection state 114 to a full-active state 148 in response to detection of the fourth signal during the reference TO time slot.

For the method 160, reference may be made to the previous explanations, advantageous features, technical effects and advantages in an analogous manner as explained in the previous sections of the present publication in connection with the Ethernet device 100, 162, 164, 166, 168.

Although the described exemplary embodiments disclosed herein focus on devices, systems, and methods for using same, the present disclosure is not necessarily limited to the example embodiments illustrate herein.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. An Ethernet device comprising:
an interface for coupling to a shared media,
wherein the Ethernet device is configured to detect a first signal via the interface,
wherein the Ethernet device is configured to change from an idle state to a tone detection state in response to detection of the first signal,
wherein the Ethernet device in the tone detection state is configured to detect a predefined second signal pattern via the interface,
wherein the Ethernet device is configured to change from the tone detection state to a cycle detection state in response to detection of the second signal pattern,
wherein the Ethernet device in the cycle detection state is configured to detect a predefined third signal pattern via the interface,
wherein the third signal pattern represents a predefined initial symbol of an arbitration cycle,
wherein the arbitration cycle comprises the initial symbol and a series of a plurality of transmit opportunity, TO, time slots following the initial symbol,
wherein the Ethernet device is assigned to a single TO time slot of the plurality of TO time slots as reference TO time slot,
wherein the Ethernet device in the cycle detection state is configured to detect a fourth signal during the reference TO time slot, and
wherein the Ethernet device is configured to change from the cycle detection state to a full-active state in response to detection of the fourth signal during the reference TO time slot.

2. The Ethernet device according to the preceding claim, wherein the second signal pattern represents a wake-up tone.

3. The Ethernet device according to any of the preceding claims, wherein the initial symbol of the arbitration cycle is a beacon symbol and/or is the leading symbol of the arbitration cycle.

4. The Ethernet device according to any of the preceding claims, wherein the fourth signal comprises a fourth signal pattern, and wherein the Ethernet device in the cycle detection state is configured to detect the fourth signal pattern during the reference TO time slot, and wherein the Ethernet device is configured to change from the cycle detection state to the full-active state in response to the detection of the fourth signal pattern during the reference TO time slot.

5. The Ethernet device according to the preceding claim, wherein the fourth signal pattern is predefined.

6. The Ethernet device according to any of the preceding claims, wherein the Ethernet device is configured to maintain in the cycle detection state if the fourth signal is transmitted on the shared media during a TO time slot other than the reference TO time slot.

7. The Ethernet device according to any of the preceding claims, wherein the Ethernet device is configured in the tone detection state to change to the idle state in response if the Ethernet device does not detect a signal during a predefined first detection time following the change to the tone detection state.

8. The Ethernet device according to any of the preceding claims, wherein the Ethernet device is configured in the cycle detection state to change to the tone detection state in response if the Ethernet device does not detect the third signal pattern during a second detection time following the change to the cycle detection state.

9. The Ethernet device according to any of the preceding claims, wherein the Ethernet device comprises a host unit, a digital MAC unit, a digital Phy unit, and an analog Phy unit.

10. The Ethernet device according to the preceding claim, wherein the analog Phy is active in the idle state and/or tone detection state, and wherein each of the host processing unit, the MAC unit, and the digital Phy unit are inactive in the idle state and/or in the tone detection state.

11. The Ethernet device according to the preceding claim, wherein the analog Phy unit is configured to detect the first signal, and wherein the Ethernet device is configured to change from the idle state to the tone detection state in response to the detection of the first signal.

12. The Ethernet device according to the preceding claim, wherein the analog Phy is configured to detect the second signal pattern if the Ethernet Phy is in the tone detection state, and wherein the Ethernet device is configured to activate the digital Phy unit in response to the detection of the second signal pattern such that the Ethernet device changes from the tone detection state to the cycle detection state.

13. The Ethernet device according to the preceding claim, wherein the active digital Phy unit is configured to detect the fourth signal pattern, and wherein the Ethernet device is configured to activate the MAC unit and the host unit in response to the detection of the fourth signal pattern such that the Ethernet device changes from the cycle detection state to the full-active state.

14. The Ethernet device according to any of the preceding claims, wherein each TO time slot is uniquely assigned to a single dedicated Ethernet device of a plurality of Ethernet devices.

15. A method for the Ethernet device, wherein the Ethernet device comprising an interface for coupling to a shared media, and wherein the method comprising the following steps:
a) the Ethernet device detecting a first signal via the interface,
b) the Ethernet device changing from an idle state to a tone detection state in response to detection of the first signal,
c) the Ethernet device, if in the tone detection state, detecting a predefined second signal pattern via the interface,
d) the Ethernet device changing from the tone detection state to a cycle detection state in response to the detection of the second signal pattern,
e) the Ethernet device, if in the cycle detection state, detecting a predefined third signal pattern via the interface, wherein the third signal pattern represents a predefined initial symbol of an arbitration cycle, wherein the arbitration cycle comprises the initial symbol and a series of a plurality of transmit opportunity, TO, time slots following the initial symbol, wherein the Ethernet device is assigned to a single TO time slot of the plurality of TO time slots as reference TO time slot,
f) the Ethernet device, if in the cycle detection state, detecting a fourth signal during the reference TO time slot, and
g) the Ethernet device changing from the cycle detection state to a full-active state in response to detection of the fourth signal during the reference TO time slot.
